# EUROPEAN PATENT SPECIFICATION

(11) **EP 3 369 319 B1**
(45) Date of publication and mention of the grant of the patent: **26.05.2021**
(21) Application number: 18159363.3
(22) Date of filing: 01.03.2018
(51) Int. Cl.: A01P 11/00, A01P 7/04, A01N 59/04, A01M 13/00, A01M 1/20

(54) **METHOD FOR COMBATTING PESTS, IN PARTICULAR INSECTS AND/OR RODENTS PRESENT IN TRANSPORT CONTAINERS AND SYSTEM THEREFORE**
VERFAHREN ZUR BEKÄMPFUNG VON SCHÄDLINGEN, INSBESONDERE VON IN TRANSPORTBEHÄLTERN VORHANDENEN INSEKTEN UND/ODER NAGERN UND ANLAGE DAFÜR
PROCÉDÉ DE LUTTE CONTRE DES RAVAGEURS, EN PARTICULIER DES INSECTES ET/OU DES RONGEURS PRÉSENTS DANS DES RÉCIPIENTS DE TRANSPORT ET L'UNITÉ POUR CELA

(30) Priority: 01.03.2017 NL 2018450
(43) Date of publication of application: 05.09.2018
(73) Proprietor: P. van Eck Beheer B.V., 5694 NM Son en Breugel (NL)
(72) Inventor: VAN ECK, Paulus Anthonius Cornelis, 5694 NM Son en Breugel (NL)
(74) Representative: Algemeen Octrooi- en Merkenbureau B.V.

(56) References cited:
- US-A- 4 989 363
- Dw Keever: "Use of carbon dioxide to disinfest a tobacco warehouse of the cigarette beetle", Journal of Agricultural Entomology, 1 January 1989 (1989-01-01), pages 43-51, XP055365392, Retrieved from the Internet: URL:http://scentsoc.org/Volumes/JAE/v6/1/0 0061043.pdf [retrieved on 2017-04-19]

## Description

The present invention relates to a method for combatting pests, in particular insects and/or rodents present in transport containers.

In particular, the present invention provides a method for combatting pests, such as insects, in containers, for example containers which are used in sea transport and/or air transport.

The globalisation and increase in international freight transport has resulted in non-indigenous animal and plant material being spread across the globe. Rodents and insects may carry disease. Organisms in wood may be parasitic, which may lead to illnesses in plants and plant products.

In order to prevent the spread of non-indigenous parasites in wood, international measure ISPM 15 (International Phytosanitary Measure 15) has for example been drawn up. This is a phytosanitary measure, drawn up by the International Plant Protection Convention (a sub-organisation of the United Nations Food and Agriculture Organizations (FAO)) in March 2002, which was modified in 2006. The measure describes the treatment of wood which is applied in the international transportation of goods with the aim of killing off organisms such as parasites in the wood. The measure applies mainly to transport means such as transport crates and pallets. ISPM 15 prescribes a heat treatment, in which the wood has to be heated for at least 30 minutes, in such a way that the core thereof reaches a temperature of 56°C. This is expensive and takes a considerable amount of time.

US 4,989,363 as well as Keever et al "Use of carbon dioxide to disinfest a tobacco warehouse of the cigarette beetle",Journal of Agricultural Entomology, 1 January 1989 (1989-01-01), pages 43-51 both disclose the use of carbon dioxide in controlling pests.

In general, there is definitely a need to combat insects and/or rodents present in containers. The aim thereof is then to ensure that stocks, cargos, materials are not contaminated or harmed by insects and/or rodents, and that containers are made free from pests. In addition, countries importing sea containers do not want contaminated cargos to be unloaded since this may be damaging to the local environment and the indigenous plant and animal life.

It is an object of the present invention to provide a method for combatting pests by means of which insects and/or rodents can be killed off in an effective, quick and inexpensive manner, in particular insects and/or rodents present in a space of a transport container.

With this aim in mind, the present invention provides a method for combatting pests which are present in a space, in particular insects and/or rodents present in transport containers, comprising the steps of supplying gaseous carbon dioxide and introducing the gaseous carbon dioxide into the space.

The space is in particular a transport container, such as a freight container, but also comprises spaces in general, such as for example storage rooms and/or warehouses. Under normal circumstances, the composition of air in such a space is approximately 21% oxygen (O₂), 78% nitrogen, and 1% miscellaneous. Introducing large quantities of the gaseous carbon dioxide (CO₂) changes the composition of the air mixture in the space into a mixture in which the O₂ content is so low that the pests will suffer a total oxygen depletion. As a result thereof, the pests will die, following which they may be disposed of. Gaseous carbon dioxide can be introduced into the space in a simple manner, reaches all locations in the space and is not harmful to any products which are present in the space. In this way, the present invention provides a more efficient and animal-friendly method for combatting pests, thus achieving the object of the present invention.

The gaseous carbon dioxide may form part of a gas mixture. According to the invention, the method comprises the step of supplying a carbon dioxide-containing gas mixture. Preferably, the supplied carbon dioxide-containing gas mixture comprises at least 20% to 100% carbon dioxide. In order to obtain a low-oxygen gas mixture, the supplied carbon dioxide-containing gas mixture may then, for the remainder, substantially comprise nitrogen or another gas. In this case, the expression low-oxygen is understood to mean less than 5 vol% oxygen, such as for example less than 1 vol% oxygen.

In an embodiment, the method comprises the step of providing liquid carbon dioxide and subsequently converting the liquid carbon dioxide into gaseous carbon dioxide, in particular by evaporating the liquid carbon dioxide. The conversion takes place outside the space, in particular in an evaporation device which is configured for the purpose.

In practice, the space, such as the transport container, may be relatively cold. This means that pests present in the space may be in a state of hibernation or diapause. A state of hibernation or diapause involves a slowing down of body processes, including breathing. This applies in particular to certain insects which are able to shut down completely at low temperatures and still survive for a considerable amount of time, even without any direct access to oxygen. When combatting these kinds of pests, it is therefore desirable to bring the insects to a temperature or at least keep them at a temperature where hibernation or diapause do not occur.

In an embodiment, this is achieved by bringing the space, such as the transport container, to the correct temperature. Alternatively or additionally, the method may comprise the step of conditioning the gaseous carbon dioxide, in particular bringing the gaseous carbon dioxide to a desired temperature. The desired temperature for the gas and/or the space is for example between 10°C and 40°C, in particular between 10°C and 30°C, such as for example 20°C.

The present invention is, at least partly, based on the view that bringing the gaseous carbon dioxide to a desired temperature before introducing the gaseous carbon dioxide into the space prevents the pests from hibernating or diapausing, or greatly reduces the number of hibernating or diapausing pests. As a result thereof, insects and/or rodents are killed off in a relatively short time after the introduction of the gaseous carbon dioxide into the space.

Keeping the living environment of the pests at the correct temperature results in the insects and/or rodents not noticing, or only noticing relatively late, that the composition of the atmosphere in the space has changed. At the point in time when the pests might notice that the atmosphere has changed due to an increase in the carbon dioxide content, the insects and/or rodents will already have breathed in gaseous carbon dioxide introduced into the space, leading to an acceleration in their breathing, with a renewed intake leading to a reduction in consciousness.

An additional advantage of the use of gaseous carbon dioxide is the fact that at a desired temperature, the gaseous carbon dioxide can be introduced into the space at a relatively low pressure. Introducing gaseous carbon dioxide into the space at a relatively low pressure, preferably in the range from 2 bar to 3 bar, is attractive in order to prevent, or at least greatly reduce, the noise which accompanies the introduction of carbon dioxide into the space under pressure. This is favourable, in order to prevent pests from escaping, or at least greatly reduce the number of escaping pests. This is particularly advantageous in order to kill off the pests relatively quickly while ensuring their suffering is relatively limited.

With a known method for combatting pests, liquid carbon dioxide is introduced into a space at a relatively high pressure, preferably greater than 5.2 bar. Such a relatively great pressure during the introduction of liquid carbon dioxide results in a relatively large amount of noise and is essential in preventing the supply of liquid carbon dioxide from stopping prematurely due to the means for introducing the liquid carbon dioxide into the space freezing when carrying out the known method.

In relatively cold conditions, for example in relatively cold countries, it is possible to ensure that the space is heated to a predetermined minimum temperature, such as for example 10°C or higher. The gaseous carbon dioxide to be introduced can then be brought to a higher temperature, such as for example 20°C. In this way, it is ensured that the insects or other pests present in the space will not go into a hibernating state and that the introduction of gas can be performed in an effective manner.

It is advantageous if the method according to the present invention comprises the step of removing the gaseous carbon dioxide from the space. This is favourable in order to prevent, or at least greatly reduce, any risks to workers when entering the space. During the step of removing the gaseous carbon dioxide from the space, the space is preferably filled with air or air containing disinfectant.

In this case, it is advantageous if the gaseous carbon dioxide is removed from the space after a time period in the range from 6 hours to 48 hours after the introduction of the gaseous carbon dioxide. This is advantageous for killing off insects and/or rodents in an effective, quick and inexpensive manner.

In this case, it is favourable if, after a time period in the range from 12 hours to 24 hours after the introduction of the gaseous carbon dioxide, the gaseous carbon dioxide is removed from the space. This is advantageous for killing off insects and/or rodents in an effective, quick and inexpensive manner. The inventor has found that a residence time of the gaseous carbon dioxide at the desired temperature in the space in the range from 12 hours to 24 hours results in a desired pest control.

In an embodiment, the space comprises a space of a transport container, in particular of an intermodal transport container. Being able to apply a treatment for insects in a container has the considerable advantage that gaseous biocides no longer have to be used. According to the prior art, an intermodal container for transport is filled with gas (methyl bromide - phosphine) and subsequently transported. Upon arrival at the destination, the intermodal container is opened and the gas used is released from the container, which is possibly harmful to the people which unload the goods from the intermodal container. In addition, there are goods which absorb and very slowly adsorb these gases used in the prior art. Thus, the gas used penetrates, for example, matrasses, but is difficult to remove from them. By using carbon dioxide with the method according to the present invention, the use of gasses such as methyl bromide - phosphine is no longer necessary, which is a clear improvement for the safety of workers.

It is advantageous if the method furthermore comprises the step of bringing the space to and/or keeping the space at a further desired temperature, in which the further desired temperature is between 10°C and 40°C, preferably in which the further desired temperature is substantially equal to the desired temperature. This is advantageous in order to prevent the pests from hibernating or diapausing, or at least greatly reduces the number of hibernating or diapausing pests. This is furthermore advantageous in order to interrupt the hibernation or diapause of the pests so as to kill off the insects and/or rodents in a relatively short time after the introduction of the gaseous carbon dioxide into the space, if the temperature before the start of the method is such that the pests in the space hibernate or diapause or there is a relatively great risk thereof.

In a particularly practical embodiment of the method according to the present invention, the gaseous carbon dioxide is introduced into the space substantially evenly distributed over the volume of the space. This is particularly advantageous for killing off the pests relatively quickly while ensuring their suffering is relatively limited. In case rodents escape, a relatively even distribution is furthermore advantageous in order to prevent the rodents from escaping to a location which is reached relatively late by the gaseous carbon dioxide, or at least greatly reduce the number of rodents from being able to do so. This is particularly advantageous for killing off the pests relatively quickly while ensuring their suffering is relatively limited.

According to an aspect, the invention provides a system for use with the method according to the present invention. The system comprises a container for carbon dioxide, as well as delivery means which are connected to the container and are configured to supply gaseous carbon dioxide from the container to the space at the desired temperature.

In an embodiment, the container is configured to contain liquid carbon dioxide, in which the system comprises an evaporation device for converting the liquid carbon dioxide into gaseous carbon dioxide.

In an embodiment, the system comprises a conditioning unit for bringing the gaseous carbon dioxide to a desired temperature.

The system may comprise a heat exchanger. In particular, the heat exchanger may form part of the evaporation device and/or of the conditioning unit.

In an efficient embodiment, the heat exchanger is of the shell and plate type.

It is advantageous if the system is provided with a displaceable frame, in which the evaporation device, the conditioning device and the delivery means are provided on the displaceable frame. This is favourable for displacing the evaporation device, the conditioning device and the delivery means with respect to the container. This is favourable in order to enable practical transportation of a part of the system to a space to be decontaminated so as to kill off insects and/or rodents in an effective, quick and inexpensive manner. Preferably, the displaceable frame is configured as a vehicle which can be towed by a towing vehicle, such as a trailer or semitrailer. This is favourable in order to be able to transport a part of the system to a space to be decontaminated in a practical way so as to kill off insects and/or rodents in an effective, quick and inexpensive manner.

In this case, it is advantageous if the container is provided on the displaceable frame. This is favourable in order to enable practical transportation of a part of the system to a space to be decontaminated so as to kill off insects and/or rodents in an effective, quick and inexpensive manner. Preferably, the displaceable frame is configured as a vehicle which can be towed by a towing vehicle, such as a trailer or semitrailer. This is favourable in order to be able to transport a part of the system to a space to be decontaminated in a practical way so as to kill off insects and/or rodents in an effective, quick and inexpensive manner.

In an embodiment, the system is provided with a distribution system comprising a number of nozzles, in which the distribution system for distributing the gaseous carbon dioxide is connected to the delivery means, in which the distribution system is configured to supply the gaseous carbon dioxide to the space via the nozzles. This is favourable for introducing the gaseous carbon dioxide at a desired location in the space by positioning the nozzles in the space and thus killing off insects and/or rodents in an effective, quick and inexpensive manner.

In an embodiment, the system comprises a heating boiler for supplying a heated fluid to the evaporation device and/or the conditioning unit for converting the liquid carbon dioxide into gaseous carbon dioxide and/or bringing the gaseous carbon dioxide to the desired temperature.

In this case, it is advantageous if the system is provided with a buffer vessel for storing the heated fluid before supplying the heated fluid to the evaporation device and/or the conditioning unit. This is favourable in order to achieve a relatively constant and relatively large flow rate of the gaseous carbon dioxide at the desired temperature so as to kill off insects and/or rodents in an effective, quick and inexpensive manner.

The system comprises detection means for detecting the temperature of the gaseous carbon dioxide introduced into the space and/or for detecting the temperature of the space. This is particularly advantageous for killing off the pests relatively quickly while ensuring their suffering is relatively limited.

The system furthermore comprises a control unit which is configured to control the system so as to achieve the desired temperature of the gaseous carbon dioxide. This is advantageous in order to prevent the pests from hibernating or diapausing, or at least greatly reduce the number of hibernating or diapausing pests, so as to kill off the insects and/or rodents in a relatively short time after the introduction of the gaseous carbon dioxide into the space.

In an embodiment of the system, the control unit is furthermore configured to control the system so as to achieve the further desired temperature of the space. This is advantageous in order to prevent the pests from hibernating or diapausing, or at least greatly reduce the number of hibernating or diapausing pests, so as to kill off the insects and/or rodents in a relatively short time after the introduction of the gaseous carbon dioxide into the space. In this case, it is advantageous if the system is provided with space-heating means for bringing the space to and/or keeping the space at a desired temperature.

In the following, the invention will be explained by means of the attached figures, which illustrate some embodiments of the present invention. In the figures:
Fig. 1 shows a diagrammatic view of a system for carrying out the method according to the present invention;
Fig. 2 shows a diagrammatic view of an alternative system for carrying out the method according to the present invention;
Fig. 3 shows a diagrammatic view of a further alternative system for carrying out the method according to the present invention;
Fig. 4 shows a diagrammatic overview of details of a device according to the present invention.

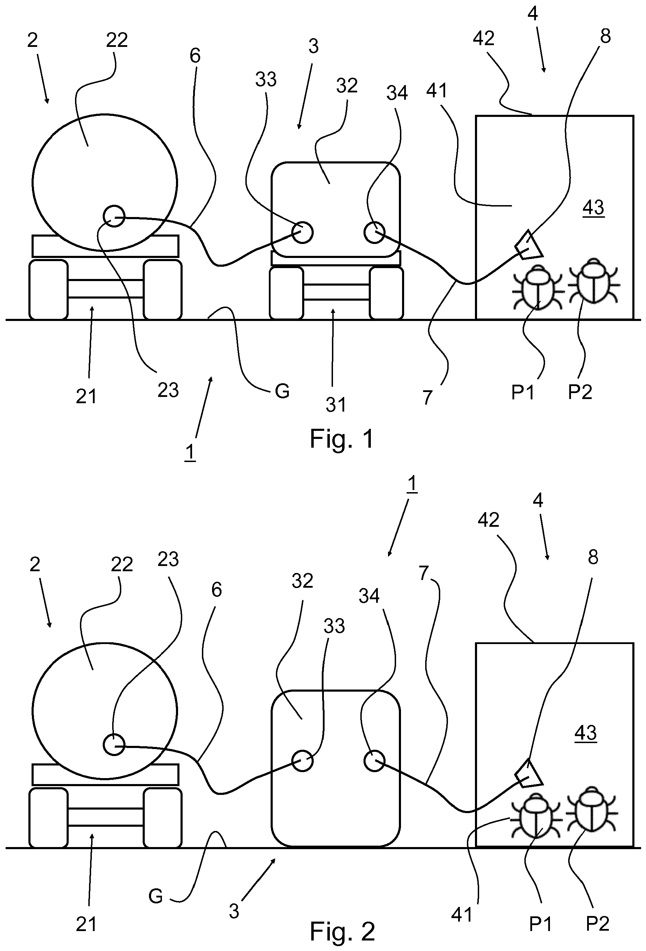

Fig. 1 shows a highly diagrammatic side view of an arrangement 1 for gassing pests P1, P2. In this case, the pests P1, P2 are situated in a space 43 of an intermodal container 4 which is positioned on a ground G. The intermodal container 4 illustrated here comprises side walls 41 and a roof 42 which delimit the space 43. The intermodal container 4 may be a standard type of intermodal transport container. In order to gas the space 43 with carbon dioxide, it is advantageous if the space 43 can be closed off slightly or even substantially completely, so that supplied carbon dioxide can accumulate in the space 43 in order to gas the pests P1, P2 present in the space. Such closing off is known per se to those skilled in the art. A controlled leak into the container is advantageous as such in this case, because then oxygen-containing air can be displaced and discharged from the container.

The system 1 furthermore comprises a tanker 2. The tanker 2 comprises a displaceable frame 21 and a container 22 for containing liquid carbon dioxide. The tanker 2 is provided with a connection 23, via which liquid carbon dioxide can be supplied from the container 22. The liquid carbon dioxide then has a temperature of approximately -25°C.

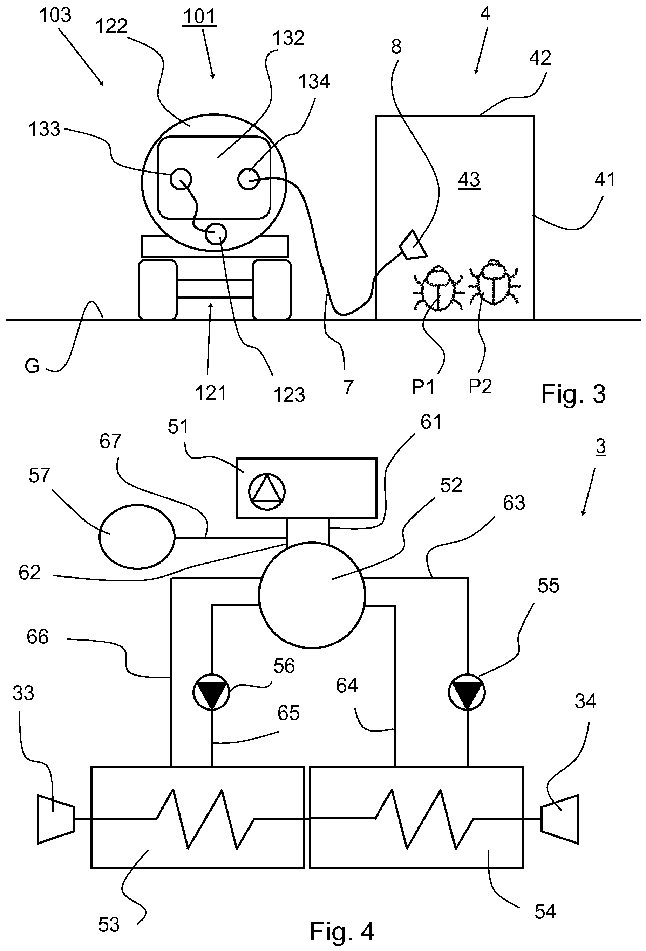

The system 1 also comprises an evaporation device 3 which is configured for converting liquid carbon dioxide to gaseous carbon dioxide. In the illustrated embodiment, the evaporation device 3 comprises a displaceable frame 31, on which an evaporator 32 is provided. In this evaporator 32, components are provided for converting the liquid carbon dioxide into the gaseous carbon dioxide, as will be explained later for illustrative purposes with reference to Fig. 4. Fig. 1 shows that a supply 33 for the liquid carbon dioxide and a discharge 34 for the gaseous carbon dioxide are provided. The supply 33 is connected to the tanker 2 via a first line 6 in such a manner that cold liquid carbon dioxide can be supplied to the evaporation device 3. A second line 7 is connected to the discharge 34 of the evaporation device 3 and is positioned in the interior of the intermodal container 4 and provided with a nozzle 8 for introducing gaseous carbon dioxide into the space. In practice, a distribution system comprising a number of nozzles may be used instead of only a single nozzle 8, so that gaseous carbon dioxide can be introduced into the intermodal container 4 at a number of locations. It will therefore be clear to those skilled in the art that the invention is not limited to the use of a single nozzle.

Using the system 1 illustrated in Fig. 1, pests P1, P2 can be gassed in the following way. The tanker 2 and the evaporation device 3 are provided and positioned in the vicinity of the intermodal container 4. The tanker 2 is connected to the evaporation device 3 via line 6 by connecting the line 6 to the outlet 23 and the supply 33. The line 7 is connected to the discharge 34 of the evaporation device 3 and the end of the line 7 (that is to say the nozzle 8 or a distribution system (not shown) comprising a number of nozzles) is introduced into the space 43 or connected thereto. The evaporation device 3 can then be activated, in which case cold liquid carbon dioxide is supplied to the evaporation device 3, is converted into gaseous carbon dioxide in situ, and is then introduced into the interior of the intermodal container 4, that is to say into the space 43, as gaseous carbon dioxide. The space 43 will be filled with gaseous carbon dioxide and as a result thereof, the pests P1, P2 will die. Preferably, the evaporation device 3 is furthermore used to condition, in particular to heat, the converted carbon dioxide to a temperature which substantially corresponds to the temperature in the space 43. To this end, the temperature of the space 43 may be measured, for example, or the current outside temperature may be used as a reference value in order to set a temperature on the basis thereof. In general, it is advantageous if the temperature is set to approximately between 10°C and 40°C, in particular between 15°C and 30°C, such as for example 20°C. It is also conceivable for the system to comprise space-heating means for heating the space 43, in particular preheating the space 43, before gassing takes place. Consideration may be given to infrared heaters and the like, which are able to preheat a space quickly and efficiently.

As can be seen in Fig. 1, converting the liquid carbon dioxide into the gaseous carbon dioxide takes place outside the space 43.

Fig. 2 shows an alternative system 1 which substantially corresponds to the system from Fig. 1, but which substantially differs therefrom by the fact that the evaporation device 3 is not provided with a displaceable frame 31 here, in contrast to Fig. 1. A displaceable frame 31 as shown in Fig. 1 is advantageous as such, because the evaporator 32 can then be positioned relatively autonomously in a desired location. However, the evaporation device 3 as illustrated in Fig. 2 forms a separate unit here, which actually consists of the evaporator 32 with the supply 33 and the discharge 34. This renders the evaporator 32 less complicated and less costly. If desired, this separate evaporator 32 may be taken to and positioned at the location of the intermodal container 4 by means of a vehicle which is suitable for the purpose. Incidentally, reference is made to the description of Fig. 4 for an explanation of the evaporator 32.

Fig. 3 shows a further alternative system 101, in which use is made of an evaporation device 103 for supplying gaseous carbon dioxide to the space 43. The evaporation device 103 comprises a displaceable frame 121, on which a container 122 for liquid carbon dioxide is positioned. The evaporator 132 is also positioned on the frame 121. The discharge 123 of the container 122 is connected to the inlet 133 of the evaporator 132; the discharge 134 of the evaporator 132 is conducted to the space 43 via line 7. In fact, this embodiment provides an integrated displaceable container for liquid carbon dioxide with evaporator 132 for producing gaseous carbon dioxide. Incidentally, the frame 121 may also be omitted in this embodiment, as is the case in the embodiment of Fig. 2.

Fig. 4 shows a diagrammatic overview of the most important components of the evaporation device 3 illustrated in Figs. 1, 2 and 3. In general, this evaporation device 3 has a supply 33 for liquid carbon dioxide and a discharge 34 for gaseous carbon dioxide. These are normally situated on the exterior of the evaporator 32, 132, the other components illustrated in Fig. 4 are then situated on the interior of the evaporator 32, 132.

Fig. 4 shows that the evaporation device 3 comprises an energy source 51, in particular a heating boiler having a power rating of between 100 kW and 5000 kW. Fluid, in particular water, which has been heated by the energy source 51, may be transported from and to a buffer vessel 52 via lines 61, 62. The buffer vessel 52 is configured to store the fluid at a temperature between 20°C and 95°C. Between the boiler 51 and the buffer vessel 52, an expansion vessel 57 is provided which is connected via line 67.

From the buffer vessel, there is a first circuit (on the left in Fig. 4) which runs to a first heat-exchanging section 53 via line 65 and a pump unit 56 placed therein, and returns to the buffer vessel 52 via line 66. The first heat-exchanging section 53 is configured to evaporate liquid carbon dioxide at -25°C (that is to say turn it into a gas) and may thus be taken to be an evaporation unit 53. To this end, the fluid in line 65 is supplied to the first heat-exchanging section 53 at a temperature between approximately 20°C to approximately 95°C. After heating the carbon dioxide and converting it into gaseous carbon dioxide, the fluid is cooled down, as an example to approximately 1°C, and will be returned to the buffer vessel 52 via line 66. By using the energy source 51, in this case the heating boiler 51, the buffer vessel 52 can be brought to and kept at the desired storage temperature. The power of the energy source 51 is in this case set in such a manner that sufficient energy can be supplied to the fluid during use to keep the buffer vessel at the desired temperature and to continue the conversion of liquid carbon dioxide into gaseous carbon dioxide during continuous use of the evaporation unit.

In summary, it may be said that the first circuit with the first heat-exchanging section 53 is configured to convert liquid carbon dioxide into gaseous carbon dioxide.

The evaporation device 3 furthermore comprises a second circuit (on the right in Fig. 4) which supplies fluid from the buffer vessel 52 to a second heat-exchanging section 54 via line 63 and a pump unit 55, and returns the fluid to the buffer vessel 52 via line 64. The second heat-exchanging section 54 is configured to heat the gaseous carbon dioxide to a desired temperature, such as for example approximately 20°C. The second heat-exchanging section 54 can thus be taken to be a conditioning unit for bringing the gaseous carbon dioxide to a desired temperature.

In the embodiment illustrated in Fig. 4, the first heat-exchanging section 53 and the second heat-exchanging section 54 are formed by a heat exchanger. The first heat-exchanging section 53 and the second heat-exchanging section 54 are placed downstream of one another and coupled to each other. The sections 53, 54 may be configured to operate separately, but may also be configured to support each other. In a particular embodiment, this may be a shell-and-plate-type heat exchanger. Obviously, other heat exchangers are also conceivable.

The evaporation device 3 may comprise a control unit which is known to those skilled in the art per se, in such a manner that the power of the energy source, the temperature of the buffer vessel and the fluid streams through the first circuit and the second circuit are automatically controlled. Furthermore, shut-off valves and pump units, possibly supplemented with buffer containers for storing gaseous CO₂, may be provided if desired. A person skilled in the art will be able to assemble and use such a system.

The evaporation device according to the present invention makes it possible to work with a fixed capacity of tons of CO₂ per hour, in which the temperature in the space 43 can remain constant. No damage can therefore occur to the equipment present in the container as a result of a drop in temperature, for example a drop below the freezing point. Also, there are no cold air streams in the space, as a result of which no possible escape behaviour is produced in rodents and/or no insects start to hibernate. In addition, the method of introducing gaseous CO₂ results in relatively less noise.

By using this evaporation device 3, it is possible to achieve desired values for CO₂ in the space within a relatively short time. In addition, the heat exchanger which is used makes it possible to ensure that the drop in temperature in the space during and after the introduction of gaseous CO₂ does not exceed 10°C and thus helps to prevent pests from starting to hibernate.

An additional advantage of introducing gaseous CO₂ into the space at an even temperature is that the pests, in particular rodents, do not breath in a cold air mixture and are consequently not alerted to the fact that a change in the air mixture has taken place. Rats and/or mice are thus not alerted to a change in the composition of the air and as soon as they take their first breath of gaseous CO₂, a lowering of the blood pH results, via the lungs, and consequently the brains are automatically given the signal to recover the drop in the pH level by taking more breaths, as a result of which the animal becomes trapped in an irreversible process.

The applicant has also found that the consumption is lower when using gaseous CO₂ than when using liquid CO₂ which is introduced into a space and is then left to evaporate. According to the applicant, this is caused by the fact that, from a molecular point of view, gaseous CO₂ takes up a greater volume than a liquid form. Thus, the same volume percentage can be achieved using fewer kilograms of CO₂.

The requested protection is defined by the attached claims.

## Claims

1. Method for combatting pests (P1, P2) which are present in a space (43), in particular insects and/or rodents, comprising the following successive steps:
- providing liquid carbon dioxide;
- converting the liquid carbon dioxide into gaseous carbon dioxide;
- bringing the gaseous carbon dioxide to a desired temperature, in which the desired temperature is between 10°C and 40°C, in particular between 10°C and 30°C;
- introducing the gaseous carbon dioxide into the space (43) for combatting pests (P1, P2) which are present in the space (43).

2. Method according to Claim 1, in which the desired temperature is adapted to an average temperature of the space (43), preferably in which the desired temperature is substantially equal to the average temperature of the space (43).

3. Method according to one of the preceding claims, in which the method comprises the step of removing the gaseous carbon dioxide from the space (43), preferably in which the gaseous carbon dioxide is removed from the space (43) after a time period in the range from 6 hours to 48 hours after the introduction of the gaseous carbon dioxide, more preferably in which the gaseous carbon dioxide is removed from the space (43) after a time period in the range from 12 hours to 24 hours after the introduction of the gaseous carbon dioxide.

4. Method according to one of the preceding claims, the method further comprising the step of bringing the space (43) to and/or keeping the space (43) at a further desired temperature, in which the further desired temperature is between 10°C and 40°C, preferably in which the further desired temperature is substantially equal to the desired temperature.

5. Method according to any of the preceding claims, in which the gaseous carbon dioxide is introduced into the space (43) substantially evenly distributed over the volume of the space.

6. Method according to any of the preceding claims, in which the gaseous carbon dioxide is introduced into the space (43) at a pressure in the range from 2 bar to 4 bar, preferably at a pressure in the range from 2 bar to 3 bar.

7. System (1, 101) for use in the method according to one of the preceding claims, comprising:
- a container (22, 122) for containing carbon dioxide, preferably for containing the liquid carbon dioxide;
- an evaporation device (3, 103) for converting the liquid carbon dioxide into gaseous carbon dioxide;
- a conditioning unit for bringing the gaseous carbon dioxide to a desired temperature;
- delivery means (7) which are configured for supplying the gaseous carbon dioxide from the container (22, 122) to the space (43) at the desired temperature;
- detection means for detecting the temperature of the gaseous carbon dioxide introduced into the space (43) and/or for detecting the temperature of the space (43); and
a control unit which is configured to control the system (1, 101) so as to achieve the desired temperature of the gaseous carbon dioxide.

8. System (1, 101) according to Claim 7, in which the system (1, 101) comprises a heat exchanger (53, 54), in particular in which the heat exchanger forms part of the evaporation device (3, 103) and/or the conditioning unit.

9. System (1, 101) according to Claim 7 or 8, in which the system (1, 101) is provided with a displaceable frame (21, 121), in which the evaporation device (3, 103), the conditioning device and the delivery means (7) are provided on the displaceable frame (21, 121).

10. System (1, 101) according to any of Claims 7 to 9, in which the system (1, 101) is provided with a distribution system comprising a number of nozzles (8), in which the distribution system for distributing the gaseous carbon dioxide is connected to the delivery means (7), in which the distribution system is configured to supply the gaseous carbon dioxide to the space (43) via the nozzles (8).

11. System (1, 101) according to any of Claims 7 to 10, in which the system (1, 101) comprises a heating boiler (51) for supplying a heated fluid to the evaporation device (3, 103) and/or the conditioning unit for converting the liquid carbon dioxide into gaseous carbon dioxide and/or bringing the gaseous carbon dioxide to the desired temperature.

12. System (1, 101) according to Claim 11, in which the system (1, 101) is provided with a buffer vessel (52) for storing the heated fluid before supplying the heated fluid to the evaporation device (3, 103) and/or the conditioning unit

13. System (1, 101) according to any one of the Claims 7 - 12 for use with the method according to Claim 4, in which the control unit is furthermore configured to control the system (1, 101) so as to achieve the further desired temperature of the space (43).

## Patentansprüche

1. Verfahren zur Bekämpfung von Schädlingen (P1, P2), die in einem Raum (43) vorhanden sind, insbesondere von Insekten und/oder Nagern, umfassend die folgenden aufeinander folgenden Schritte:
- Bereitstellen von flüssigem Kohlendioxid;
- Umwandeln des flüssigen Kohlendioxids in gasförmiges Kohlendioxid;
- Bringen des gasförmigen Kohlendioxids auf eine gewünschte Temperatur, wobei die gewünschte Temperatur zwischen 10 °C und 40 °C liegt, insbesondere zwischen 10 °C und 30 °C;
- Einführen des gasförmigen Kohlendioxids in den Raum (43) zur Bekämpfung von Schädlingen (P1, P2), die in dem Raum (43) vorhanden sind.

2. Verfahren nach Anspruch 1, wobei die gewünschte Temperatur an eine durchschnittliche Temperatur des Raumes (43) angepasst wird, wobei vorzugsweise die durchschnittliche Temperatur im Wesentlichen gleich der durchschnittlichen Temperatur des Raumes (43) ist.

3. Verfahren nach einem der vorhergehenden Ansprüche, wobei das Verfahren den Schritt des Entfernen des gasförmigen Kohlendioxids aus dem Raum (43) umfasst, wobei vorzugsweise das gasförmige Kohlendioxid nach einer Zeitspanne im Bereich von 6 Stunden bis 48 Stunden nach der Einführung des gasförmigen Kohlendioxids aus dem Raum (43) entfernt wird, wobei noch eher vorzuziehen das gasförmige Kohlendioxid nach einer Zeitspanne im Bereich von 12 Stunden bis 24 Stunden nach der Einführung des gasförmigen Kohlendioxids aus dem Raum (43) entfernt wird.

4. Verfahren nach einem der vorhergehenden Ansprüche, wobei das Verfahren ferner den Schritt des Bringens des Raumes (43) auf und/oder des Haltens des Raumes (43) bei einer weiteren gewünschten Temperatur umfasst, wobei die weitere gewünschte Temperatur zwischen 10 °C und 40 °C ist, wobei vorzugsweise die weitere gewünschte Temperatur im Wesentlichen gleich der gewünschten Temperatur ist.

5. Verfahren nach einem der vorhergehenden Ansprüche, wobei das gasförmige Kohlendioxid im Wesentlichen gleichmäßig über das Volumen des Raumes verteilt in den Raum (43) eingeführt wird.

6. Verfahren nach einem der vorhergehenden Ansprüche, wobei das gasförmige Kohlendioxid bei einem Druck im Bereich von 2 bar bis 4 bar, vorzugsweise bei einem Druck im Bereich von 2 bar bis 3 bar in den Raum (43) eingeführt wird.

7. Anlage (1, 101) zur Verwendung in dem Verfahren nach einem der vorhergehenden Ansprüche, die Folgendes umfasst:
- einen Behälter (22, 122) zum Enthalten von Kohlendioxid, vorzugsweise zum Enthalten des flüssigen Kohlendioxids;
- eine Verdampfungsvorrichtung (3, 103) zum Umwandeln des flüssigen Kohlendioxids in gasförmiges Kohlendioxid;
- eine Konditionierungseinheit, um das gasförmige Kohlendioxid auf eine gewünschte Temperatur zu bringen;
- Zuführmittel (7), die dazu ausgelegt sind, das gasförmige Kohlendioxid bei der gewünschten Temperatur aus dem Behälter (22, 122) in den Raum (43) zuzuführen;
- Detektionsmittel zum Detektieren der Temperatur des in den Raum (43) eingeführten gasförmigen Kohlendioxids und/oder zum Detektieren der Temperatur des Raumes (43); und
eine Steuereinheit, die dazu ausgelegt ist, die Anlage (1, 101) zu steuern, um die gewünschte Temperatur des gasförmigen Kohlendioxids zu erreichen.

8. Anlage (1, 101) nach Anspruch 7, wobei die Anlage (1, 101) einen Wärmetauscher (53, 54) umfasst, wobei insbesondere der Wärmetauscher einen Teil der Verdampfungsvorrichtung (3, 103) und/oder der Konditionierungseinheit bildet.

9. Anlage (1, 101) nach Anspruch 7 oder 8, wobei die Anlage (1, 101) mit einem versetzbaren Rahmen (21, 121) versehen ist, wobei die Verdampfungsvorrichtung (3, 103), die Konditionierungsvorrichtung und das Zuführmittel (7) an dem versetzbaren Rahmen (21, 121) angeordnet sind.

10. Anlage (1, 101) nach einem der Ansprüche 7 bis 9, wobei die Anlage (1, 101) mit einem Verteilungssystem versehen ist, das eine Anzahl von Düsen (8) umfasst, wobei das Verteilungssystem zum Verteilen des gasförmigen Kohlendioxids mit dem Zuführmittel (7) verbunden ist, wobei das Verteilungssystem dazu ausgelegt ist, das gasförmige Kohlendioxid über die Düsen (8) dem Raum (43) zuzuführen.

11. Anlage (1, 101) nach einem der Ansprüche 7 bis 10, wobei die Anlage (1, 101) einen Heizkessel (51) zum Zuführen eines erhitzten Fluids zur Verdampfungsvorrichtung (3, 103) und/oder zur Konditionierungseinheit umfasst, um flüssiges Kohlendioxid in gasförmiges Kohlendioxid umzuwandeln und/oder das gasförmige Kohlendioxid auf die gewünschte Temperatur zu bringen.

12. Anlage (1, 101) nach Anspruch 11, wobei die Anlage (1, 101) mit einem Puffergefäß (52) zum Speichern des erhitzten Fluids, bevor das erhitzte Fluid zur Verdampfungsvorrichtung (3, 103) und/oder zur Konditionierungseinheit zugeführt wird, versehen ist.

13. Anlage (1, 101) nach einem der Ansprüche 7 - 12 zur Verwendung mit dem Verfahren nach Anspruch 4, wobei die Steuereinheit ferner dazu ausgelegt ist, die Anlage (1, 101) zu steuern, um die weitere gewünschte Temperatur des Raumes (43) zu erreichen.

## Revendications

1. Procédé de lutte contre les ravageurs (P1, P2) qui sont présents dans un espace (43), notamment les insectes et/ou les rongeurs, comprenant les étapes successives suivantes qui consistent :
- à fournir du dioxyde de carbone liquide ;
- à convertir le dioxyde de carbone liquide en dioxyde de carbone gazeux ;
- à porter le dioxyde de carbone gazeux à une température souhaitée, où la température souhaitée est comprise entre 10°C et 40°C, notamment entre 10°C et 30°C ;
- à introduire le dioxyde de carbone gazeux dans l'espace (43) pour lutter contre les ravageurs (P1, P2) qui sont présents dans l'espace (43).

2. Procédé selon la revendication 1, dans lequel la température souhaitée est adaptée à une température moyenne de l'espace (43), de préférence où la température souhaitée est essentiellement égale à la température moyenne de l'espace (43).

3. Procédé selon l'une des revendications précédentes, dans lequel le procédé comprend l'étape qui consiste à éliminer le dioxyde de carbone gazeux de l'espace (43), de préférence où le dioxyde de carbone gazeux est éliminé de l'espace (43) après une durée dans l'intervalle de 6 heures à 48 heures après l'introduction du dioxyde de carbone gazeux, plus préférablement où le dioxyde de carbone gazeux est éliminé de l'espace (43) après une durée dans l'intervalle de 12 heures à 24 heures après l'introduction du dioxyde de carbone gazeux.

4. Procédé selon l'une des revendications précédentes, le procédé comprenant en outre l'étape qui consiste à porter l'espace (43) et/ou à maintenir l'espace (43) à une autre température souhaitée, où l'autre température souhaitée est comprise entre 10°C et 40°C, de préférence où l'autre température souhaitée est essentiellement égale à la température souhaitée.

5. Procédé selon l'une des revendications précédentes, dans lequel le dioxyde de carbone gazeux est introduit dans l'espace (43) en étant essentiellement distribué uniformément sur le volume de l'espace.

6. Procédé selon l'une des revendications précédentes, dans lequel le dioxyde de carbone gazeux est introduit dans l'espace (43) à une pression dans l'intervalle de 2 bar à 4 bar, de préférence à une pression dans l'intervalle de 2 bar à 3 bar.

7. Système (1, 101) pour une utilisation dans le procédé selon l'une des revendications précédentes, comprenant :
- un contenant (22, 122) pour contenir du dioxyde de carbone, de préférence pour contenir le dioxyde de carbone liquide ;
- un dispositif d'évaporation (3, 103) pour convertir le dioxyde de carbone liquide en dioxyde de carbone gazeux ;
- une unité de conditionnement pour porter le dioxyde de carbone gazeux à une température souhaitée ;
- des moyens d'alimentation (7) qui sont configurés pour fournir le dioxyde de carbone gazeux du contenant (22, 122) à l'espace (43) à la température souhaitée ;
- des moyens de détection pour détecter la température du dioxyde de carbone gazeux introduit dans l'espace (43) et/ou pour détecter la température de l'espace (43) ; et
une unité de commande qui est configurée pour commander le système (1, 101) de manière à atteindre la température souhaitée du dioxyde de carbone gazeux.

8. Système (1, 101) selon la revendication 7, dans lequel le système (1, 101) comprend un échangeur de chaleur (53, 54), notamment où l'échangeur de chaleur fait partie du dispositif d'évaporation (3, 103) et/ou de l'unité de conditionnement.

9. Système (1, 101) selon la revendication 7 ou 8, dans lequel le système (1, 101) est pourvu d'un châssis mobile (21, 121), où le dispositif d'évaporation (3, 103), le dispositif de conditionnement et les moyens d'alimentation (7) sont prévus sur le châssis mobile (21, 121).

10. Système (1, 101) selon l'une des revendications 7 à 9, dans lequel le système (1, 101) est pourvu d'un système de distribution comprenant un nombre de buses (8), où le système de distribution pour distribuer le dioxyde de carbone gazeux est relié aux moyens d'alimentation (7), où le système de distribution est configuré pour fournir le dioxyde de carbone gazeux à l'espace (43) par l'intermédiaire des buses (8).

11. Système (1, 101) selon l'une des revendications 7 à 10, dans lequel le système (1, 101) comprend une chaudière de chauffage (51) pour fournir un fluide chauffé au dispositif d'évaporation (3, 103) et/ou à l'unité de conditionnement pour convertir le dioxyde de carbone liquide en dioxyde de carbone gazeux et/ou porter le dioxyde de carbone gazeux à la température souhaitée.

12. Système (1, 101) selon la revendication 11, dans lequel le système (1, 101) est pourvu d'un récipient tampon (52) pour stocker le fluide chauffé avant de fournir le fluide chauffé au dispositif d'évaporation (3, 103) et/ou à l'unité de conditionnement.

13. Système (1, 101) selon l'une quelconque des revendications 7 à 12 pour une utilisation avec le procédé selon la revendication 4, dans lequel l'unité de commande est en outre configurée pour commander le système (1, 101) de manière à atteindre l'autre température souhaitée de l'espace (43).
